# EUROPEAN PATENT APPLICATION

(11) **EP 2 452 771 A1**
(43) Date of publication of application: **16.05.2012**
(21) Application number: 10797012.1
(22) Date of filing: 22.06.2010
(51) Int. Cl.: B23D 47/00, B24B 27/06, B24B 55/04, B27G 19/02

(54) **STRUCTURE FOR PREVENTING SEPARATION OF FIXING DEVICE FOR GUARD MEMBER IN CUTTING MACHINE**

(30) Priority: 10.07.2009 JP 2009163884
(71) Applicant: Makita Corporation, Anjo-shi, Aichi 446-8502 (JP)
(72) Inventor: SASAKI Katsuhiko, Anjo-shi Aichi 446-8502 (JP)
(74) Representative: Kramer - Barske - Schmidtchen
(86) International application number: PCT/JP2010/060535
(87) International publication number: WO 2011/004701

(57) **Abstract**

In a tabletop cutting machine, in the case that a mounting portion of a rotary blade with respect to a spindle is guarded by a guard member, operability of a maintenance work such as replacement of a rotary blade is improved by preventing the guard member from falling out due to excessive loosening of a fixing device that can fix the guard member at a guard position.

A head portion (30a) of a fixing device (30) is entered into an engaging hole (31a) of a leaf spring (31) whereby an urging force of the leaf spring is applied in a tightening direction. The leaf spring (31) prevents the fixing device (30) from being unintentionally excessively loosened and from falling out of the body case (11).

## Description

### Technical Field

The present invention relates to a fall-out preventing structure for a fixing device of a guard member that is configured to guard a mounting portion of a rotary blade in a cutting machine having, for example, a circular grinding wheel or the rotary blade such as a saw blade or a tipped circular saw.

### Background Art

For example, a tabletop cutting machine includes a table for placing a material to be cut on an upper surface, and a cutting machine body supported above the table and operated to move upward and downward, and a cutting work is performed by moving the cutting machine body downward while a rotary blade is rotated, so that the rotary blade cuts into the material to be cut, which is fixed on the table. A technology relating to the cutting machine of this type is disclosed, for example, in the following Patent Document.
The cutting machine body includes a body case (blade case) supported so as to be movable upward and downward with respect to the table. An electric motor is mounted in the body case as a drive source. A rotational output of the electric motor is transmitted through a speed reduction gear train to a spindle that projects into the body case. In the body case, the rotary blade is fixed to the spindle with a blade fixing device such as a nut. The front of the mounting portion of the rotary blade with respect to the spindle (a rotary blade mounting portion) is guarded (shielded) by a guard member such as a guard panel. Generally, the guard member is supported by the body case. The guard member guarding the front of the rotary blade mounting portion prevents the blade fixing device from becoming damaged or from being loosened unintentionally due to interference with other articles or the like.
In contrast, the guard member is configured to be capable of being retracted from the front of the rotary blade mounting portion in order to ensure ease of maintenance such as removing the rotary blade from the spindle. Normally, the guard member is supported by the body case in such a state that it can pivot vertically between a guard position, which shields the front of the rotary blade mounting portion, and a retracted position, which opens the same. By opening the front of the rotary blade mounting portion, mounting and demounting operations of the rotary blade can be performed easily. Normally, the guard member is configured to be reliably fixed to the guard position with a fixing screw or the like.

### Prior Art Document

### Patent Document

Patent Document 1: Japanese Patent No.3553267

### Summary of Invention

### Problems to be Solved by the Invention

However, according to the guard structure of the related art described above, if the fixing screw is loosened too much unintentionally for moving the guard member from the guard position to an open position, the fixing screw might be removed from a threaded hole of the body case. If the fixing screw is removed, the operation for fixing again the guard member after the maintenance has been completed becomes cumbersome and, in addition, if the removed fixing screw has been lost, it requires a troublesome work for finding the screw and, in some cases, another fixing screw must be prepared.
Accordingly, it is an object of the present invention to prevent a fixing device such as a fixing screw for fixing a guard member to a guard position from unintentionally falling out, so that convenience of fixing operation with respect to mainly the guard position of the guard member is provided.

### Means for Solving the Problems

The above-described problem is solved by the invention described below.
According to a first aspect of the invention, in a fall-out preventing structure of a cutting machine configured to perform a cutting operation by rotating a rotary blade by an electric motor mounted on a body case of a cutting machine body, a mounting portion of the rotary blade with respect to a spindle configured to output a rotary motive power of the electric motor is guarded by a guard member, the guard member is supported by the body case such that the guard member is movable between a guard position for guarding the mounting portion of the rotary blade and an open position for opening the mounting portion and is able to be fixed at the guard position by a fixing device, and the fixing device is provided with a fall-out preventing member for preventing fall-out from the body case.
With the first aspect of the invention, the fixing device for fixing the guard member to the guard position is provided with the fall-out preventing member for preventing the fixing device from falling out of the body case, and therefore, it is not necessary to make efforts for looking for the fixing device or setting the same again in a stage of fixing the guard member again at the guard position after completion of the maintenance work for the rotary blade mounting portion; in this respect, the operation for fixing the guard member can be rapidly and easily performed, and hence the workability of the maintenance operation can be improved.
For example, a fixing screw can be used as the fixing device. The fixing screw may be screwed into a threaded hole of the body case, so that the guard member is fixed at the guard position. By loosening the fixing screw, the guard member can be moved to the open position. The fixing screw is prevented by the fall-out preventing member from being excessively loosened and removed from the threaded hole, so that a part of its threaded shaft portion is always held in the state of being screwed into the threaded hole, hence fall-out from the body case can be prevented. Therefore, in the stage of fixing the guard member again at the guard position, it is not necessary to make an effort of again setting the threaded shaft portion of the fixing screw into the threaded hole, and simply rotating the fixing screw in the tightening direction can tighten the fixing screw for fixing the guard member
According to a second aspect of the invention, in the first aspect of the invention, the guard member is configured to be movable between the guard position and the open position as the guard member rotates upward and downward.
With the second aspect of the invention, the guard member is supported by the body case so as to be rotatable upward and downward via a support shaft. For example, it may be possible to configure such that the guard member moves to the open position as it rotates downward, and that the guard member moves to the guard position as it rotates upward. In the case that a flat plate (a guard plate) is used as the guard member, the movement between the guard position and the open position is achieved by rotating the plate in a plane direction along the side surface of the body case.
According to a third aspect of the invention, in the first or second aspect of the invention, the fall-out from the body case is prevented by mounting a leaf spring serving as the fall-out preventing member on the body case and engaging the fixing device with the leaf spring.
With the third aspect of the invention, the fall-out of the fixing device can be prevented by using a simple and inexpensive configuration. The leaf spring is mounted on the body case in a state in which its urging force acts in the fixing direction of the fixing device (the direction for fixing the guard member). Therefore, as the fixing device is moved in the direction (the direction for releasing the fixing state of the guard member) opposite to the fixing direction against the urging force of the leaf spring, the fixed state of the guard member at the guard position is released. With the configuration of moving the fixing device against the urging force of the leaf spring, the fixing device is prevented from being unintentionally excessively moved in the direction opposite to the fixing direction, whereby the fall-out of the fixing device from the body case is prevented.
According to a fourth aspect of the invention, in the third aspect of the invention, an engaging hole is formed in the leaf spring, and a fixing screw serving as the fixing device is prevented from falling out of the body case due to prying of a head portion of the fixing screw against the engaging hole.
With the fourth aspect of the invention, the head portion of the fixing screw is engaged in a state of being entered into the engaging hole of the leaf spring, and therefore, the fall-out of the fixing screw from the threaded hole of the body case can be further reliably prevented.

### Brief Description of the Drawings

[Fig. 1] Fig. 1 is a side view of an entire tabletop cutting machine having a fall-out preventing structure for a fixing device according to an embodiment of the present invention.
[Fig. 2] Fig. 2 is a front view of a body case, showing a state in which a guard member is fixed to a guard position.
[Fig. 3] Fig. 3 is a front view of the body case, showing a state in which the guard member is moved to an open position.
[Fig. 4] Fig. 4 is a horizontal sectional view taken along the line (IV)-(IV) in Fig. 2, showing a state in which a fixing device is tightened.
[Fig. 5] Fig. 5 is a horizontal cross-sectional view showing a state in which the fixing device is loosened from the state shown in Fig. 4.
[Fig. 6] Fig. 6 is a side view of the fixing device provided with a fall-out preventing member according to another embodiment.
[Fig. 7] Fig. 7 is a side view of the fixing device provided with a fall-out preventing member according to a further embodiment.
[Fig. 8] Fig. 8 is a front view of the body case provided with a guard member according to another embodiment, showing a state in which the guard member is fixed to the guard position.
[Fig. 9] Fig. 9 is a front view of the body case provided with a guard member according to another embodiment, showing a state in which the fixing device is loosened and the guard member is moved to the open position.

### Modes for Carrying Out the Invention

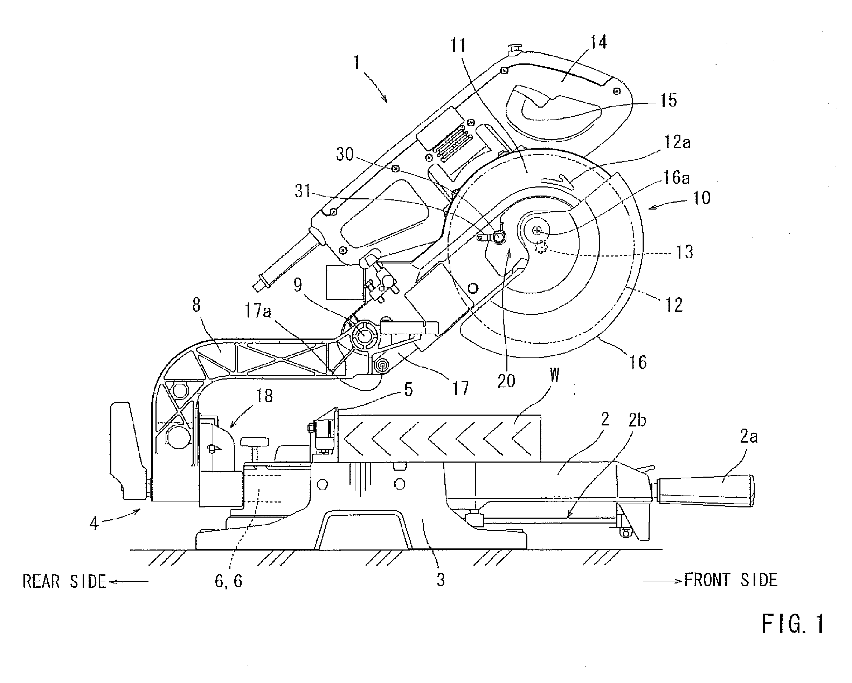

Referring now to Fig. 1 to Fig. 7, an embodiment of the present invention will be described. Fig. 1 shows an entire tabletop cutting machine 1 as an example of a cutting machine. The tabletop cutting machine 1 includes a table 2 for fixing a material W to be cut, on an upper surface thereof, a base 3 for supporting the table 2 so as to be rotatable within a certain angular range horizontally, a body supporting portion 4 provided on a rear portion (a left end portion in Fig. 1) of the table 2, and a cutting machine body 10 supported above the table 2 by the body supporting portion 4. In Fig. 1, a user is positioned on the right side of the tabletop cutting machine 1. On the front of the table 2, which is the side positioned nearer to the user, there are provided a grip portion 2a that the user may hold, and a lock mechanism 2b for positioning and fixing the rotational position of the table 2, or the like.
Arranged on the upper surface of the table 2 is a positioning fence 5 for positioning the material W to be cut, in the direction of the plane of the table. The positioning fence 5 is fixed on the side of the base 3, and is arranged in a state of straddling over the upper surface of the table with a small gap so as to allow the horizontal rotation of the table 2. The material W to be cut, positioned by the positioning fence 5 is fixed to the upper surface of the table 2 by a clamp device, which is not illustrated.
The body supporting portion 4 includes a pair of left and right slide bars 6, 6 configured to support the cutting machine body 10 so as to be slidable in the horizontal direction with respect to the table 2, an inclinable support mechanism 18 configured to incline the cutting machine body 10 leftward or rightward when viewed from the user (the direction orthogonal to the paper plane in Fig. 1), and a body supporting arm 8 configured to support the cutting machine body 10 so as to be tiltable upward and downward. The cutting machine body 10 is supported so as to be slidable in the forward and rearward directions along the direction of the plane of the table via the slide bars 6, 6. The sliding direction of the cutting machine body 10 by both the slide bars 6, 6 corresponds to the cutting direction. Normally, cutting of the material W to be cut is performed by sliding the cutting machine body 10 from the right side toward the left side in Fig. 1.

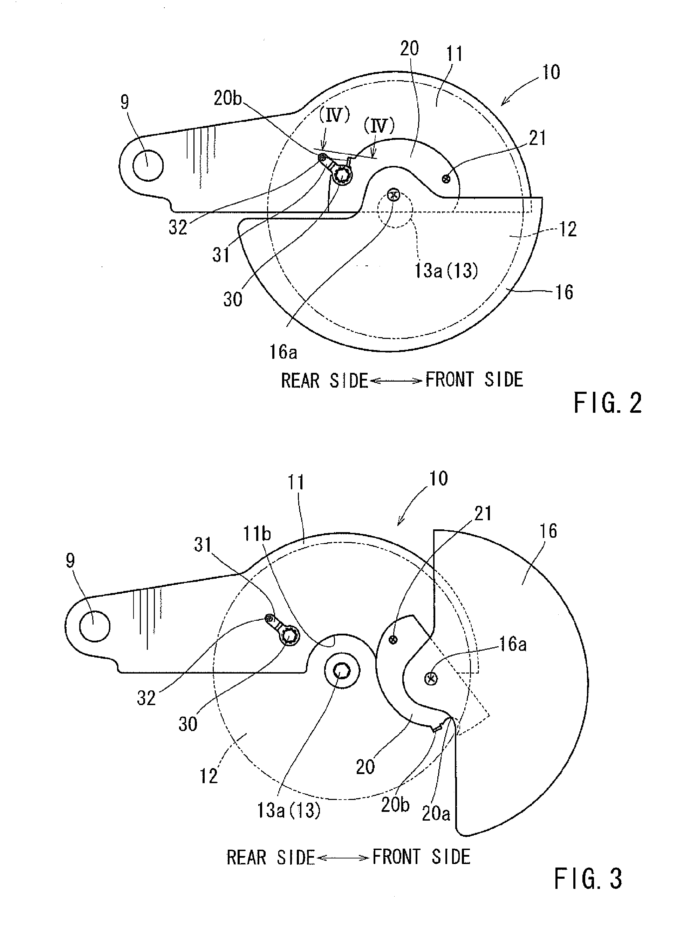

The body supporting arm 8 is bent into an L-shape, and a body case 11 of the cutting machine body 10 is supported at a bent distal end side so as to be tiltable upward and downward via a body tilting shaft 9. The body case 11 covers a range of upper half the circumference of a circular rotary blade 12. The rotary blade 12 rotates clockwise in Fig. 1 as shown by a hollow arrow 12a indicated on the body case 11. The rotary blade 12 is mounted on the spindle 13. A spindle 13 is rotatably supported by the body case 11, and rotates via an electric motor and a reduction gear train mounted on the back side (not visible in Fig. 1) of the body case 11. A threaded hole is formed at a distal end portion of the spindle 13 projecting into the body case 11, and a flanged fixing bolt 13a is tightened into the threaded hole, so that the rotary blade 12 is fixed to a distal end of the spindle 13.
Provided on the back side of the body case 11 is a handle portion 14 that the user holds. When the user holds the handle portion 14 and pulls a switch lever 15 of a trigger type with a fingertip, the electric motor is activated and the rotary blade 12 rotates. When the user holds the handle portion 14 and tilts the cutting machine body 10 downward, the rotating rotary blade 12 can cut the material W to be cut.
A movable cover 16 covers a range of substantially lower half the circumference of the rotary blade 12. The movable cover 16 is supported by the guard member 20 in a state of being vertically pivotable via a support shaft 16a extending in parallel to the spindle 13. The guard member 20 is supported by the body case 11. Detailed description of the guard member 20 will be given later.
The movable cover 16 is opened and closed in conjunction with the tilting operation of the cutting machine body 10. A link arm 17 is interposed between the movable cover 16 and a distal end portion the body supporting arm 8. A rear end portion a (left end portion in the drawing) of the link arm 17 is coupled to the distal end portion of the body supporting arm 8 so as to be vertically pivotable via a support shaft 17a. The support shaft 17a is arranged at a position shifted away from the body tilting shaft 9 by a certain dimension. In association with the tilting operation of the cutting machine body 10, the link arm 17 is tilted vertically about the support shaft 17a with respect to the body supporting arm 8. When the cutting machine body 10 is tilted downward, the movable cover 16 rotates counterclockwise in Fig. 1 and is opened, whereby the range of lower half the circumference of the rotary blade 12 is gradually opened. When the cutting machine body 10 is tilted upward, the movable cover 16 is rotated clockwise in Fig. 1 and is gradually closed. Fig. 1 and Fig. 2 show a state in which the movable cover 16 is closed, while Fig. 3 shows a state in which the movable cover 16 is opened.

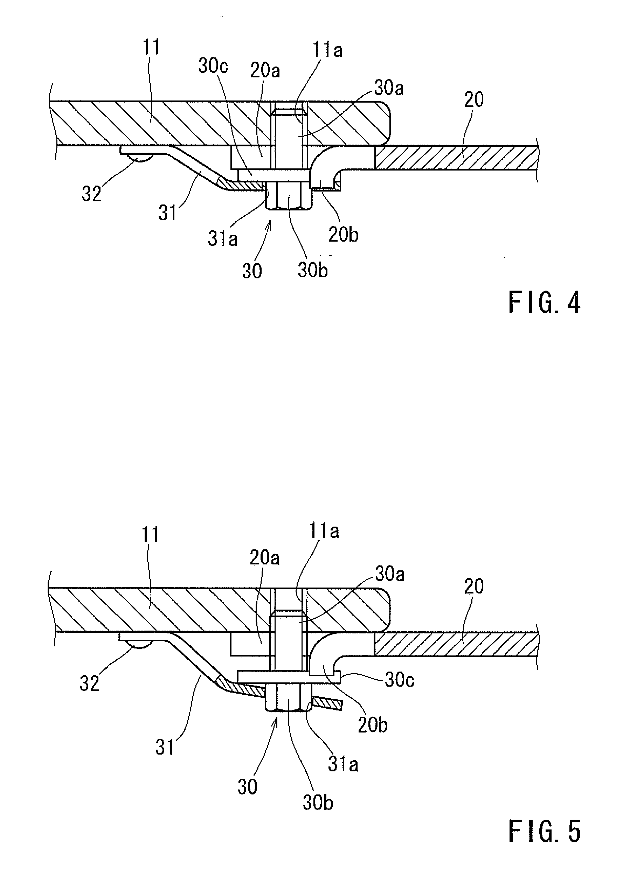

Fig. 2 and Fig. 3 show the guard member 20 in detail. The guard member 20 is formed into a substantially semi-circular flat panel and functions as a supporting base for supporting the movable cover 16 and also as a shielding panel which covers (guards) the mounting portion of the rotary blade 12 with respect to the spindle 13 . As shown in Fig. 3, formed on the front side (the near side in Fig. 3) of the body case 11 is a semi-circular relief recess 11b for opening the mounting portion toward the front. The relief recess 11b is closed by the guard member 20 that is a separate member. In this specification, a position which closes the relief recess 11b as shown in Fig. 2 is referred to as a guard position of the guard member 20 and a position, which opens the same as shown in Fig. 3, is referred to as an open position of the guard member 20. By fixing the guard member 20 to the guard position, a center of rotation of the movable cover 16 (a support shaft 21) is substantially matched with a center of rotation (the spindle 13) of the rotary blade 12.
The guard member 20 is mounted on the front side of the body case 11. The guard member 20 is supported by the body case 11 in such a state that its front end side is vertically rotatable via the support shaft 21. An engaging recess 20a and a stopper projection 20b are formed on the rear end side of the guard member 20. In this embodiment, the engaging recess 20a is formed into a semi-circular shape so as to open upward.
A fixing device 30 is mounted on the front side of the body case 11 so as to correspond to the engaging recess 20a. Fig. 4 and Fig. 5 show the fixing device 30 in detail. As illustrated, in this embodiment, a hexagonal bolt is used as the fixing device 30. A threaded shaft portion 30a of the fixing device 30 is tightened into a threaded hole 11a provided on the front side of the body case 11. A flange portion 30c is integrally provided on a head portion 30b of the fixing device 30. When the guard member 20 is positioned at the guard position, the threaded shaft portion 30a of the fixing device 30 is brought into a state of entering the engaging recess 20a of the guard member 20 from above.
As shown in Fig. 4, as the fixing device 30 is tightened firmly in this entered state, the periphery of the engaging recess 20a is clamped between a front surface (a side surface) of the body case 11 and the flange portion 30c of the fixing device 30, so that the guard member 20 is fixed to the guard position. Also, in the tightened state of the fixing device 30, the stopper projection 20b of the guard member 20 interferes with the flange portion 30c of the fixing device 30 from above, and with this operation, the downward (toward the open position) rotation of the guard member 20 is restricted, also causing the guard member 20 to be fixed at the guard position.

The head portion 30b of the fixing device 30 is positioned in an engaging hole 31a of a leaf spring 31. The engaging hole 31a is formed to have a diameter which allows entry of the head portion 30b but does not allow passage of the flange portion 30c therethrough. The leaf spring 31 corresponds to one embodiment of the fall-out preventing member for the fixing device defined in the claims and functions to prevent the fixing device 30 from falling out of the threaded hole 11a and hence from the body case 11.
The engaging hole 31a is formed at one end side of the leaf spring 31. The other end side of the leaf spring 31 is fixed to the front surface of the body case 11 by a mounting screw 32. The urging force of the leaf spring 31 acts in a direction for moving the fixing device 30 in the tightening direction (the upper side in Figs. 4 and 5) via the flange portion 30c. Therefore, when loosening the fixing device 30, the fixing device 30 is rotated in the loosening direction against the urging force of the leaf spring 31 (moved downward in Figs. 4 and 5).
Also, when the fixing device 30 is loosened by a certain amount as shown in Fig. 5, the head portion 30b is displaced in a downward direction in the drawing. When the fixing device 30 is loosened and is displaced in a downward direction, the distal end side of the leaf spring 31 is displaced in a downward direction by being pushed by the flange portion 30c against the urging force. When the distal end side of the leaf spring 31 is displaced, an axis of the engaging hole 31a is inclined with respect to the head portion 30b of the fixing device 30, so that the head portion 30b of the fixing device 30 is engaged in a state of being obliquely bit into (pried against) the engaging hole 31a. As a further displacement of the fixing device 30 toward the loosening direction is restricted also by such prying (biting), falling of the fixing device 30 out of the threaded hole 11a is prevented.

When the fixing device 30 is sufficiently loosened within a range that does not cause the fixing device 30 to be fallen out, the flange portion 30c is moved away from a peripheral edge portion of the engaging recess 20a and is separated from the lower side of the stopper projection 20b, so that the fixation of the guard member 20 on the side of the rotating distal end side (the rear end portion side) is released. The engaging recess 20a of the guard member 20 is formed in a state of opening upward, and therefore, if the fixing state by the fixing device 30 is released, the guard member 20 is brought into a state of being capable of rotating downward (counterclockwise in the drawing). As shown in Fig. 3, when the guard panel 20 is rotated downward about the support shaft 21, the mounting portion of the rotary blade 12 (the flanged fixing bolt 13a) with respect to the spindle 13 and the periphery thereof are opened toward the front side. When the guard member 30 is moved to the open position and the rotary blade mounting portion is opened in this way, the maintenance operation such as the rotary blade replacement operation can be easily performed due to ease of engagement of a spanner with respect to the fixing bolt 13. The maintenance operation is performed in a state in which the fixing device 30 is mounted into the threaded hole 11a (the state in which the threaded shaft portion 30a is partly screwed into the threaded hole 11a). Therefore, when the guard member 20 is fixed at the guard position again after completion of the maintenance operation, the operation for tightening the fixing device 30 can be performed rapidly. In contrast, if a fixing screw serving as a fixing device is unintentionally loosened too much to cause the fixing screw to be fallen out of a threaded hole as is the case of the related art, an effort of finding the fixing screw and setting the screw again into the threaded hole again is required for fixing the guard member again at the guard position, and it is necessary to find another fixing screw if the fixing screw has been lost. In this respect, it may take much time in some cases for the fixing operation of the guard member. According to the present embodiment, since the fixing device 30 is prevented from falling out by the leaf spring 31, it is not necessary to reset the screw into the threaded hole or to make an effort such as that for looking for another fixing screw, and therefore, the fixing operation and hence the maintenance operation of the guard member 20 can be performed rapidly

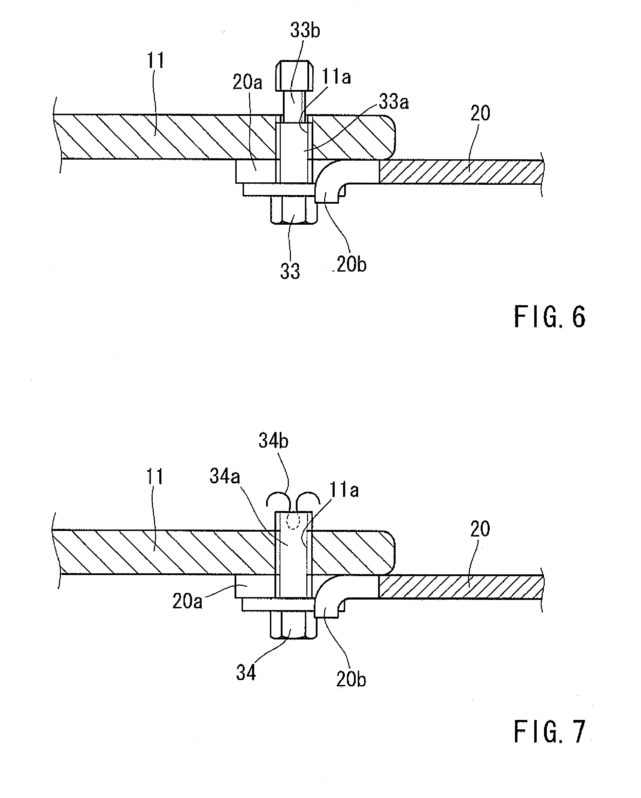

According to the fall-out preventing structure for the fixing device according to the embodiment configured as described above, even if the fixing device 30 is loosened in order to move the guard member 20 to the opening position, the fixing device 30 may not fall out of the threaded hole 11a due to the unintentional loosening as in the related art, hence the tightening operation of the fixing device 30 can be performed rapidly when the guard member 20 is subsequently fixed again at the guard position, and in this respect, the maintenance operation for the rotary blade mounting portion can be performed efficiently.
Various modifications may be made to the embodiment described above. For example, although the hexagonal bolt was exemplified as the fixing member, other types of screws (bolts) may also be applicable. In addition, in addition to the screw, coupling members having the other configurations, such as a clip or an insertion pin may be used as the fixing device.
Although the guard member 20 is rotatably supported at its the front side and is fixed at its back side in the exemplified configuration, a configuration reversed in the fore-and-aft direction, that is, a configuration rotatably supported at the back side and fixed at the front side is also applicable.
Also, although the exemplified configuration uses the leaf spring 31 as the fall-out preventing member for the fixing device 30, for example, as shown in Fig. 6, it is also possible to provide a non-threaded portion 33b formed by partly removing a thread at a middle portion of a threaded shaft portion 33a of a fixing device 33 as a fall-out preventing member. Also, as shown in Fig. 7 for example, it may be possible to apply a configuration in which a distal end of a threaded shaft portion 34a of a fixing device 34 projects toward an inner surface side of the body case 11, and an engaging spring 34b is mounted on a distal end of a projecting portion so as to protrude laterally for preventing falling out of the threaded hole 11 a.

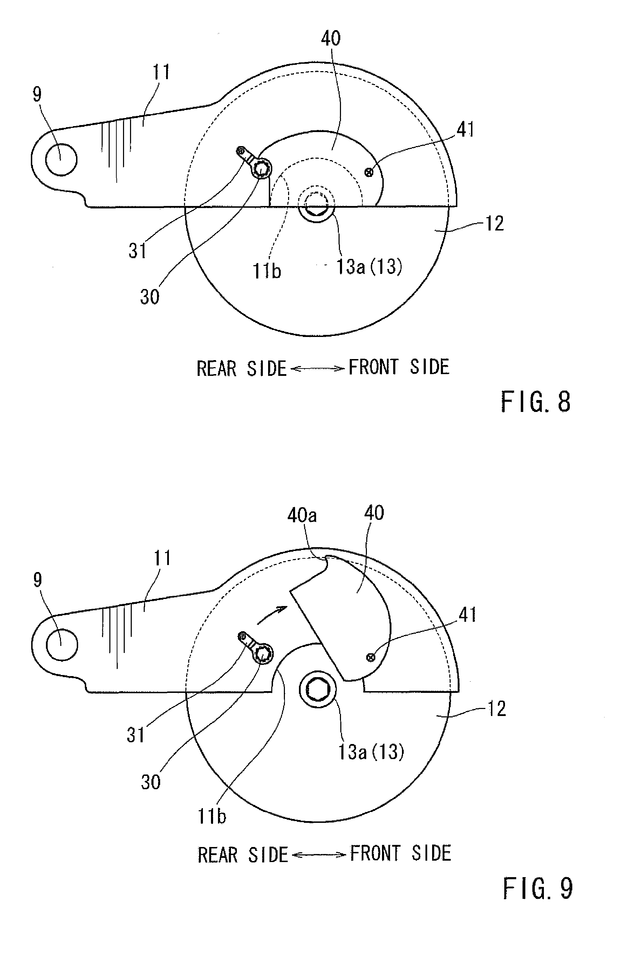

In addition, in the exemplified configuration, the guard member 20 is rotated downward to move to the open position, however it is also possible to apply a configuration in which the guard member 20 is rotated upward (clockwise in Fig. 2) to move to the open position. A guard member 40 having such a configuration is shown in Fig. 8 and Fig. 9. The guard member 40 is also supported at its front portion by the body case 11 in a state of being capable of rotating upward and downward via a support shaft 41 in the same manner as the guard member 20.
The guard member 40 is provided with an engaging recess 40a at a rear portion thereof. The engaging recess 40a is provided in a state of opening downward inversely with the engaging recess 20a. The fixing device 30 is provided on a lateral portion of the body case 11 to correspond to the engaging recess 40a. The fixing device 30 is prevented from falling out of the body case 11 by the leaf spring 31 in the same manner as described above.
Fig. 8 shows the state in which the guard member 40 is rotated downward and is fixed at the guard position. In this state, the engaging recess 40a is engaged with the fixing device 30 from above, so that the guard member 40 is fixed at the guard position. Fig. 9 shows the state in which the fixing device 30 is loosened and the guard member 40 is rotated upward to the open position.
In this manner, in the case of the configuration in which the guard member 40 is rotated upward to be moved to the open position, even if the fixing device 30 has been loosened, the guard member 40 is prevented from rotating downward from the guard position because the engaging recess 40a is brought to ride thereon from above, so that a portion corresponding to the stopper projection 20b of the guard member 20 can be omitted.
Although the movable cover 16 is rotatably supported by the guard member 20 in the exemplified configuration, the movable cover 16 may be rotatably supported by the other portion, and the same configuration can be applied in a same manner to a cutting machine having no movable cover. The movable cover is not supported by the above-described guard member 40. Therefore, the configuration of fixing the guard member 40 at the guard position by the exemplified fixing device 30 may be applied to a cutting machine lacking this type of movable cover, such as a cutting machine having a grinding wheel as a rotary blade.

### Reference Numerals

1 ... tabletop cutting machine
2 ... table, 2a ... grip portion, 2b... lock mechanism
3 ... base
4 ... body supporting portion
5 ... positioning fence
6 ... slide bar
8 ... body supporting arm
9 ... body tilting shaft
W ... material to be cut
10 ... cutting machine body
11 ... body case, 11a ... threaded hole
12 ... rotary blade
13 ... spindle, 13a ... fixing bolt
14 ... handle portion
15 ... switch lever
16 ... movable cover, 16a ... support shaft
17 ... link arm, 17a ... support shaft
20 ... guard member, 20a ... engaging recess, 20b ... stopper proj ection
21 ... support shaft
30 ... fixing device (fixing bolt)
30a ... threaded shaft portion, 30b ... head portion, 30c ... flange portion
31 ... leaf spring, 31a ... engaging hole
32 ... mounting screw
33, 34 ... fixing device (fixing screw)
33a, 34a ... threaded shaft portion, 33b ... screw missing portion, 34b ... engaging spring
40 ... guard member, 40a ... engaging recess

## Claims

1. A fall-out preventing structure in a cutting machine configured to perform a cutting operation by rotating a rotary blade by an electric motor mounted on a body case of a cutting machine body, wherein:
a mounting portion of the rotary blade with respect to a spindle configured to output a rotary motive power of the electric motor is guarded by a guard member,
the guard member is supported by the body case such that the guard member is movable between a guard position for guarding the mounting portion of the rotary blade and an open position for opening the mounting portion and is able to be fixed at the guard position by a fixing device, and
the fixing device is provided with a fall-out preventing member for preventing fall-out from the body case.

2. The fall-out preventing structure according to Claim 1, wherein the guard member is configured to be movable between the guard position and the open position as the guard member rotates upward and downward.

3. The fall-out preventing structure according to Claim 1 or 2, wherein the fall-out from the body case is prevented by mounting a leaf spring serving as the fall-out preventing member on the body case and engaging the fixing device with the leaf spring.

4. The fall-out preventing structure according to Claim 3, wherein an engaging hole is formed in the leaf spring, and a fixing screw serving as the fixing device is prevented from falling out of the body case due to prying of a head portion of the fixing screw against the engaging hole.
